# EUROPEAN PATENT SPECIFICATION

(11) **EP 4 575 059 B1**
(45) Date of publication and mention of the grant of the patent: **30.09.2026**
(21) Application number: 24219413.2
(22) Date of filing: 12.12.2024
(51) Int. Cl.: D04H 3/007, B60N 2/70, D04H 3/037, D04H 3/16, B29C 48/05, B29C 48/88

(54) **METHOD OF MAKING AN EXTRUDED MESH BODY FOR A VEHICLE SEAT AND THE ARTICLE MADE THEREBY**
VERFAHREN ZUR HERSTELLUNG EINES EXTRUDIERTEN NETZKÖRPERS FÜR EINEN FAHRZEUGSITZ UND DAMIT HERGESTELLTER ARTIKEL
PROCÉDÉ DE FABRICATION D'UN CORPS DE MAILLE EXTRUDÉ POUR UN SIÈGE DE VÉHICULE ET ARTICLE AINSI FABRIQUÉ

(30) Priority: 19.12.2023 US 202363612215 P; 18.07.2024 DK PA202470196; 27.11.2024 US 202418962730
(43) Date of publication of application: 25.06.2025
(60) Divisional application: 26199594.8 / 4 813 606
(73) Proprietor: Lear Corporation, Southfield, MI 48033 (US)
(72) Inventor: Reyes, Fernando, 6000 Cebu City (PH); Ornopia, Earl Andrei, 6014 Mandaue, Cebu (PH); Alope, Michael Kint, 6000 Cebu City (PH); Pestano, Carlo Suson, 6014 Mandaue City, Cebu (PH)
(74) Representative: Grünecker Patent- und Rechtsanwälte PartG mbB

(56) References cited:
- EP-A1- 4 461 166
- EP-B1- 1 082 480
- WO-A1-2023/132308
- WO-A1-2023/220261
- US-A1- 2006 116 045

## Description

### REFERENCE TO RELATED APPLICATIONS

This application claims priority to U.S. patent application Serial No. 18/962,730 filed November 27, 2024 and also claims the benefit of U.S. provisional application Serial No. 63/612,215 filed December 19, 2023. This application also claims priority to Denmark patent application No. PA202470196 filed July 18, 2024.

### TECHNICAL FIELD

An extruded body of polymer filaments made according to a method that forms a pad having different densities across the width of the extruded body. The purpose of the invention is to provide seat assemblies, seat frames, seat covers and cushions. The following describes apparatuses and methods that are suitable for the production thereof. WO2023/220261A1 discloses cushions, seat assemblies, apparatuses, and methods for producing the same. WO 2023/132308 A1 relates to a pillow cushion and a method for manufacturing a pillow cushion. US 2006/116045 A1 relates to a resin-molded article with a spring structure, and to a method and apparatus for preparing a superficial layer of such a resin-molded article. EP 1082480 B1 relates to a method and an apparatus for manufacturing cushion members adapted for use in seats of vehicles.

The present invention relates to a method according to the subject-matter of claim 1.

### BRIEF DESCRIPTION OF THE DRAWINGS

FIGURE 1 isa diagrammatic view of a plastic extrusion line.
FIGURE 2 isa elevation view of a variable speed tractor section having a plurality of tractor belts arranged across the extrusion perpendicular to the extrusion direction.
FIGURE 3 isa front elevation view of a seat backrest cushion.
FIGURE 4 isa top plan view of a seat cushion.
FIGURE 5 is a cross section view taken through the extruded preform.
FIGURE 6 is a perspective view of a vehicle seat partially fragmented showing the frame and seat cover.

### DETAILED DESCRIPTION

Reference will now be made in detail to embodiments, examples of which are illustrated in the accompanying drawings. In the following detailed description, numerous specific details are set forth in order to provide a thorough understanding of the various described embodiments. However, it will be apparent to one of ordinary skill in the art that the various described embodiments may be practiced without these specific details. In other instances, well- known methods, procedures, components, circuits, and networks have not been described in detail so as not to unnecessarily obscure aspects of the embodiments.

It is to be understood that the disclosed embodiments are merely exemplary and that various and alternative forms are possible. The figures are not necessarily to scale; some features may be exaggerated or minimized to show details of particular components. Therefore, specific structural and functional details disclosed herein are not to be interpreted as limiting, but merely as a representative basis for teaching one skilled in the art to variously employ embodiments according to the disclosure.

One or more" includes a function being performed by one element, a function being performed by more than one element, *e.g*., in a distributed fashion, several functions being performed by one element, several functions being performed by several elements, or any combination of the above.

It will also be understood that, although the terms first, second, etc. are, in some instances, used herein to describe various elements, these elements should not be limited by these terms. These terms are only used to distinguish one element from another. For example, a first contact could be termed a second contact, and, similarly, a second contact could be termed a first contact, without departing from the scope of the various described embodiments. The first contact and the second contact are both contacts, but they are not the same contact.

The terminology used in the description of the various described embodiments herein is for the purpose of describing particular embodiments only and is not intended to be limiting. As used in the description of the various described embodiments and the appended claims, the singular forms "a", "an" and "the" are intended to include the plural forms as well, unless the context clearly indicates otherwise. It will also be understood that the term "and/or" as used herein refers to and encompasses any and all possible combinations of one or more of the associated listed items. It will be further understood that the terms "includes," "including," "comprises," and/or "comprising," when used in this specification, specify the presence of stated features, integers, steps, operations, elements, and/or components, but do not preclude the presence or addition of one or more other features, integers, steps, operations, elements, components, and/or groups thereof.

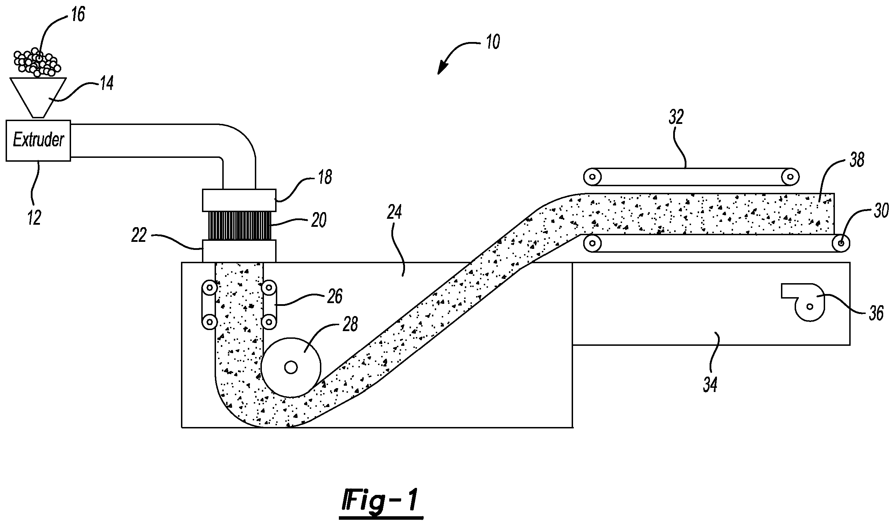

Referring to Figure 1, an extrusion line 10 is illustrated diagrammatically for forming a preform strip 38 of polymer filaments 20. An extruder 12 receives resin beads 16 from a resin hopper 14 that are melted in the extruder 12 and then provided to a die head 18. The die head 18 extrudes the polymer filaments 20 that are then fed through a shaping funnel 24. The shaping funnel 24 deposits the polymer filaments 20 into a cooling tank 24. The polymer filaments 20 are pulled into the cooling tank 24 by a tractor section 26 at a controllable rate of speed. As the preform strip 38 is pulled into the cooling tank 24 the polymer filaments 20 are welded together as they are initially cooled by the water in the cooling tank 24. A roller 28 in the cooling tank 24 pulls the preform strip 38 further into the cooling tank 24. An unload conveyor 32 unloads the preform strip 38 from the cooling tank 24 while a shaker table 30 shakes the preform strip 38 to remove water from the preform strip 38. A return water trough 34 collects the water as it drains from the preform strip 38. A blower 36 is directed over the return water trough 34 to cool the water as it returns to the cooling tank 24.

The polymer filaments 20 comprise strands, fibers, or strips that are welded, glued, or melted and reformed into a three-dimensional mesh structure 38. The preform strip 38 comprises an intermediate preform for manufacturing a plurality of vehicle seat pads that are subsequently cut into individual seat pads and molded to a predetermined shape.

The polymer resin 16 comprises LLDPE, or HDPE that are provided to the resin hopper 14 in the form of resin beads, ground polymer resin, or the like.

The cooling tank 24 is filled with water or an aqueous coolant solution for polymers.

The tractor section 26 is described below in greater detail pulls the polymer filaments 20 in a longitudinal direction that is the extrusion direction which is the direction that the polymer strands 20 flow from the die head 18 and shaping funnel 24.

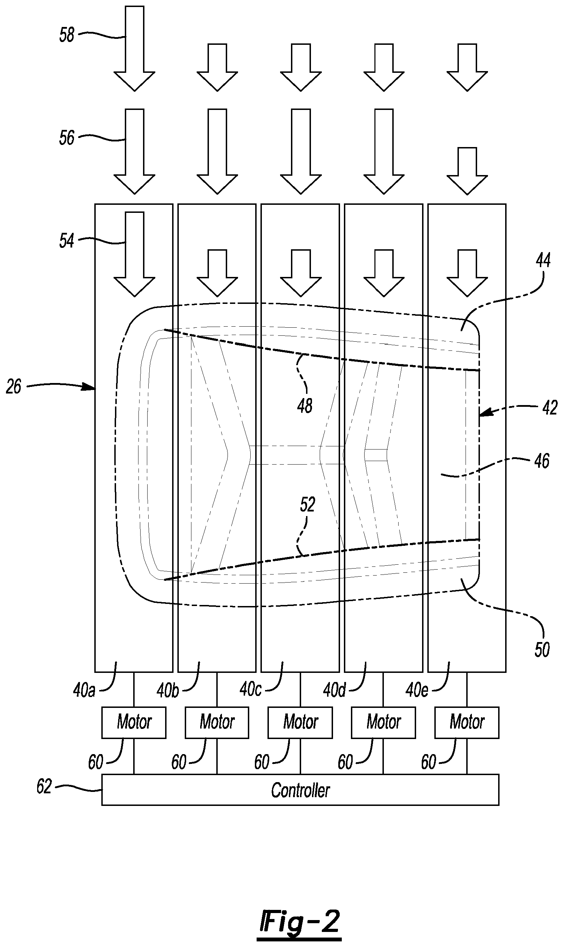

Referring to Figure 2, the tractor section 26 shown in Figure 1 is shown to include a plurality of tractor belts 40a-40e that are controlled to move at a variable speed relative to each other to thereby form zones, or regions, having different hardness characteristics. In Figure 2 a seat base image 42 is super imposed on the view of the tractor belts 40a-40e. The seat base image 42 represents the seat to be formed when the preform strip 38 is cut into discrete seat pad pieces that are then formed in a mold into the shape of the illustrated seat pad.

The seat pad image 42, shown in phantom lines, includes a first hardness zone 44 and a second hardness zone 46. A first boundary 48 is formed between the first hardness zone 44 and the second hardness zone 46. A third hardness zone 50 and the second hardness zone 46 form a second boundary 52 therebetween. As shown in Figure 2, the first boundary 48 and the second boundary 52 are not perpendicular to the longitudinal direction that the belts move, or extrusion direction, but instead converge from the front portion of the seat base image 42 to the rear portion of the seat base image 42.

It should be understood that the boundaries 48 and 52 can be curved or can be disposed in a wide variety of angular orientations relative to the longitudinal direction to provide the desired variation of the hardness profile in predetermined zones, or regions, of the molded seat cushion. The first boundary 48 and the second boundary 52 can extend fully across the preform strip 38 or can extend partially across the preform strip 38. The boundary can alternatively be characterized as a transition area between different hardness zones.

A first speed arrow 54 is shown at the infeed end of the tractor belt section 26 that graphically illustrates the different speeds that the various tractor belts 40a-40e act upon the preform strip 38. The size of the first speed arrows 54 corresponds to the speed that the respective tractor belts are moved.

A second speed arrow 56 is illustrated in Figure 2 above the first speed arrow 54 and represents that at subsequent time the speed of the tractor belts 40e-40e is changed to change the apparent/bulk density locally in the preform strip 38. Similarly, a third speed arrow 58 shown above the second speed arrow 56 in Figure 2 shows that additional speed changes can be made to again vary the apparent/bulk density of the preform strip 38. The length of each speed arrow 52, 54, 56 is varied to indicate the relative speed of the tractor belts 40a-40e changes as the polymer filaments 20 are drawn through the tractor section 26.

The apparent/bulk density of the pad is controlled by the tactor belts 40a-40e. The apparent/bulk density is not the same as filament density which is the density of a single strand. The spacing of the strands is controlled by the speed that the tractor belts 40a-40e pull the strands into the cooling tank 24, or water bath. The apparent/bulk density in a respective zone of the seat base increases as the speed of the tractor conveyor belts 40a-40e decreases. Conversely, the apparent/bulk density in a respective zone of the seat base decreases as the speed of the tractor conveyor belts 40a-40e increases. There is an upper limit on the difference in speed differences on how fast adjacent tractor belts can move. If the speed difference is too great, some of the filaments may become over-stretched or may break, become thin, or lose bonding locations. The extent of apparent/bulk density variations in the cushion is limited but may approach 60% variation from one zone to another.

Motors 60a-60e are variable speed motors controlled by a controller 62. The controller 62. The controller is programmed to change the speed of the motors individually and the movement of the tractor belts 40a-40e to match or correspond to the specified apparent/bulk density of the zones of seat cushion to be manufactured.

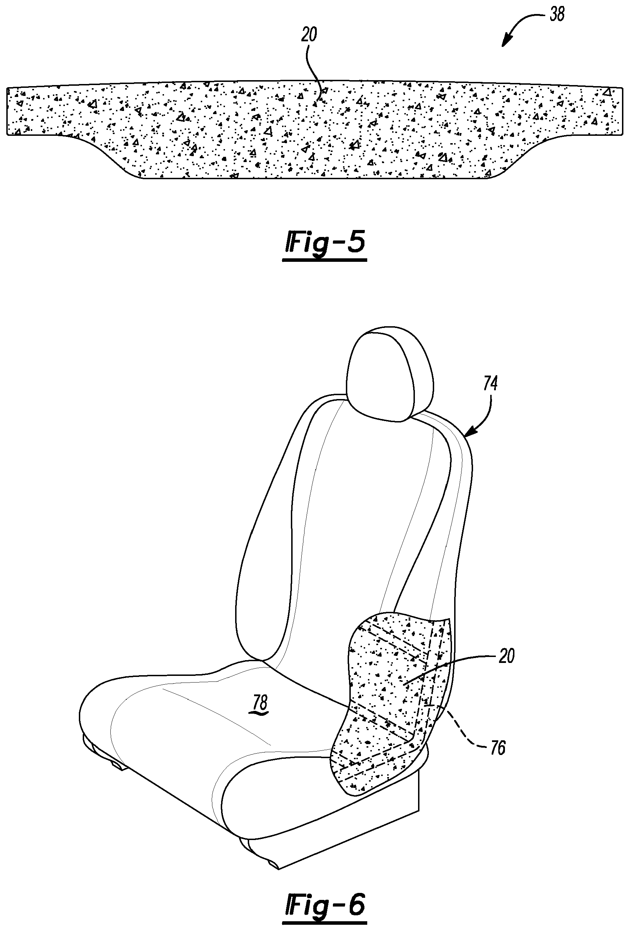

Referring to Figure 5, the preform strip 38 is illustrated in cross section across the width of the preform strip 38 to show the apparent/bulk density variations across the preform strip 38.
Different apparent/bulk densities are illustrated by the relative looseness and compacting in the different zones.

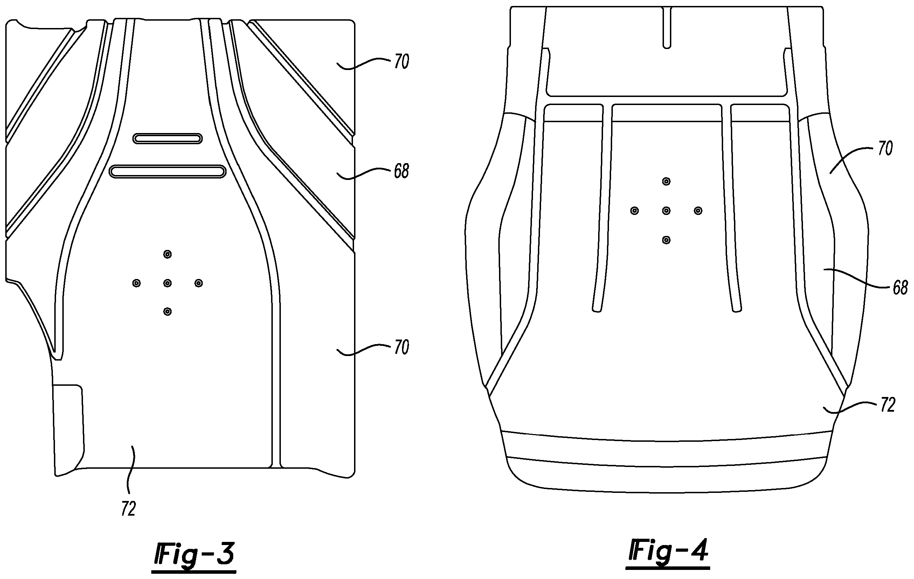

Referring to Figures 3 and 4, a seat backrest 64 is illustrated in Figure 3 and a seat cushion 66 is illustrated in Figure 4 that include a soft zone 68, or region, and three different hard zones, or regions, 70, 72, and 74 of different hardness values. The hardness of the soft zone, for example, is 1 .2 kPA and the apparent/bulk density is 1.8 kg/m³. The three different hard zones have a hardness ranging from 1.2 kPA to 23.1 kPA and the apparent/bulk density ranging from 1.8 kg/m³ to 5.8 kg/m³.

Referring to Figure 6, a vehicle seat assembly 74 is illustrated that comprises a seat frame 76, a seat cover 78, a seat backrest cushion 64 and a seat base cushion 66. The seat frame 76 and cover 78 are provided in a wide range of styles and designs. The seat backrest cushion 64 and the seat base cushion 66 are polymer filaments formed first into the preform strip 38 that is divided into separate cushions or seat pads and molded to shape before being assembled to the vehicle seat assembly 74. The preform strip 38 is divided into a plurality of seat backrest cushions 64, or seat base cushions 66, that are assembled each to one of a plurality of seat frames 76 and covered by one of a plurality of seat covers 78.

## Claims

1. A method comprising:
melting a polymer resin (16) to form a molten polymer;
extruding the molten polymer through a die head (18) to form extruded polymer filaments (20);
shaping and bonding the extruded polymer filaments (20) into a strip of filaments (20) comprising a predetermined cross-section;
pulling the strip of filaments (20) into a cooling bath (24) in a longitudinal direction with a plurality of tractor belts arrayed transverse to the longitudinal direction, wherein the tractor belts each move one of a plurality of portions of the strip of filaments (20) in the longitudinal direction; and controlling the plurality of tractor belts (40a-40e) to move one of the plurality of portions of the strip of filaments (20) at different speeds relative to the other ones of the plurality of tractor belts (40a-40e) to locally control a bulk density of the plurality of portions of the strip of filaments (20) across a width of the strip of polymer filaments (20).

2. The method according to claim 1 further comprising:
cutting the strip of filaments (20) transverse to the longitudinal direction to form a plurality of seat pad preforms (64, 66).

3. The method according to claim 2 further comprising:
molding the plurality of seat pad preforms (64, 66) into a contoured shape of a plurality of seat pads (64, 66).

4. The method according to any of claims 1 to 3, further comprising:
assembling the plurality of seat pads (64, 66) each to one of a plurality of seat frames (76) and/or covering the plurality of seat pads (64, 66) each with one of a plurality of seat covers (78).

5. The method according to any of claims 1 to 4, wherein the polymer resin is HDPE,
or wherein the polymer resin is a thermoplastic polymer (16),
or wherein the polymer resin is LLDPE.

## Patentansprüche

1. Ein Verfahren, umfassend:
Schmelzen eines Polymerharzes (16) zur Bildung eines geschmolzenen Polymers;
Extrudieren des geschmolzenen Polymers durch einen Düsenkopf (18), um extrudierte Polymerfilamente (20) zu bilden;
Formung und Verbindung der extrudierten Polymerfilamente (20) zu einem Streifen aus Filamenten (20), der einen vorgegebenen Querschnitt umfasst;
Ziehen des Streifens aus Filamenten (20) in ein Kühlbad (24) in einer Längsrichtung mit einer Vielzahl von Schlepperbändern, die quer zur Längsrichtung angeordnet sind, wobei die Schlepperbänder jeweils einen von einer Vielzahl von Abschnitten des Streifens aus Filamenten (20) in der Längsrichtung bewegen; und
Steuern der Vielzahl von Schlepperbändern (40a-40e), um einen der Vielzahl von Abschnitten des Streifens aus Filamenten (20) bei unterschiedlichen Geschwindigkeiten relativ zu den anderen der Vielzahl von Schlepperbändern (40a-40e) zu bewegen, um eine Schüttdichte der Vielzahl von Abschnitten des Streifens aus Filamenten (20) über eine Breite des Streifens aus Polymerfilamenten (20) lokal zu steuern.

2. Das Verfahren nach Anspruch 1, ferner umfassend:
Schneiden des Streifens aus Filamenten (20) quer zur Längsrichtung, um eine Vielzahl von Sitzkissenvorformlingen (64, 66) zu bilden.

3. Das Verfahren nach Anspruch 2, ferner umfassend:
Formen der Vielzahl von Sitzkissenvorformlinge (64, 66) zu einer konturierten Form einer Vielzahl von Sitzkissen (64, 66).

4. Das Verfahren nach einem der Ansprüche 1 bis 3, ferner umfassend:
Montieren der Vielzahl von Sitzkissen (64, 66) jeweils an einem einer Vielzahl von Sitzrahmen (76) und/oder Abdecken der Vielzahl von Sitzkissen (64, 66) jeweils mit einem einer Vielzahl von Sitzabdeckungen (78).

5. Das Verfahren nach einem der Ansprüche 1 bis 4, wobei das Polymerharz HDPE ist, oder wobei das Polymerharz ein thermoplastisches Polymer (16) ist, oder wobei das Polymerharz LLDPE ist.

## Revendications

1. Procédé, comprenant les étapes consistant à :
faire fondre une résine polymère (16) pour former un polymère fondu ;
extruder le polymère fondu à travers une tête de filière (18) pour former des filaments de polymère extrudés (20) ;
mettre en forme et lier les filaments de polymère extrudés (20) en une bande de filaments (20) comprenant une section transversale prédéterminée ;
tirer la bande de filaments (20) jusque dans un bain de refroidissement (24) dans une direction longitudinale à l'aide d'une pluralité de courroies de traction agencées en réseau transversalement à la direction longitudinale, dans lequel les courroies de traction déplacent chacune une certaine d'une pluralité de parties de la bande de filaments (20) dans la direction longitudinale ; et commander la pluralité de courroies de traction (40a-40e) pour déplacer une certaine de la pluralité de parties de la bande de filaments (20) à des vitesses différentes par rapport aux autres de la pluralité de courroies de traction (40a-40e) afin de commander localement une densité apparente de la pluralité de parties de la bande de filaments (20) sur une largeur de la bande de filaments de polymère (20).

2. Procédé selon la revendication 1, comprenant en outre l'étape consistant à :
découper la bande de filaments (20) transversalement à la direction longitudinale pour former une pluralité de préformes de coussin de siège (64, 66).

3. Procédé selon la revendication 2, comprenant en outre l'étape consistant à :
mouler la pluralité de préformes de coussin de siège (64, 66) en une forme profilée d'une pluralité de coussins de siège (64, 66).

4. Procédé selon l'une quelconque des revendications 1 à 3, comprenant en outre l'étape consistant à :
assembler la pluralité de coussins de siège (64, 66) chacun à un certain d'une pluralité de cadres de siège (76) et/ou couvrir la pluralité de coussins de siège (64, 66) chacun avec un certain d'une pluralité de recouvrements de siège (78).

5. Procédé selon l'une quelconque des revendications 1 à 4, dans lequel la résine polymère est du HDPE,
ou dans lequel la résine polymère est un polymère thermoplastique (16),
ou dans lequel la résine polymère est du LLDPE.
